# EUROPÄISCHE PATENTSCHRIFT

(11) **EP 0 979 204 B1**
(45) Veröffentlichungstag und Bekanntmachung des Hinweises auf die Patenterteilung: **25.09.2002**
(21) Anmeldenummer: 98933427.1
(22) Anmeldetag: 30.04.1998
(51) Int. Cl.: B65H 3/00

(54) **VORRICHTUNG ZUR ÜBERGABE VON STÜCKGUT ZWISCHEN ZWEI FÖRDERERN**
DEVICE FOR TRANSFERRING ARTICLES BETWEEN TWO CONVEYORS
DISPOSITIF POUR LE TRANSFERT DE COLIS ENTRE DEUX CONVOYEURS

(30) Priorität: 30.04.1997 DE 19718442
(43) Veröffentlichungstag der Anmeldung: 16.02.2000
(73) Patentinhaber: SIEMENS AKTIENGESELLSCHAFT, 80333 München (DE)
(72) Erfinder: RASCHKE, Josef, D-85652 Pliening (DE); SCHUSTER, Rudolf, D-85551 Kirchheim (DE); ROMBAUER, Theodoro, D-86415 Mering (DE)
(86) Internationale Anmeldenummer: DE9801206
(87) Internationale Veröffentlichungsnummer: WO98049083

(56) Entgegenhaltungen:
- EP-A- 0 395 178
- EP-A- 0 659 665
- EP-A- 0 729 907
- US-A- 5 082 267

## Beschreibung

Vorrichtung zur Übergabe von Stückgut zwischen zwei Förderern mit einander kreuzenden Förderrichtungen, wobei einer der Förderer als Zuführförderer und der andere als Übernahmeförderer ausgebildet ist.

Es ist üblich, im Kreuzungsbereich der Förderer das Stückgut auf dem Zuführförderer gegen einen Anschlag laufen zu lassen und von dort mittels eines Schiebers dem Übernahmeförderer zu übergeben. Dabei entsteht zwischen anschlagenden Stückgut und dem z.B. weiterlaufenden Förderband Bremsreibung, die den Bandverschleiß erhöht. Um während des Wegschiebens das nachfolgende Stückgut während des seitlichen Herausschiebens aus dem Zuführförderer nicht auflaufen zu lassen, ist es erforderlich, einen entsprechenden Abstand zwischen den aufeinanderfolgenden Stücken einzuhalten bzw. den Zuführförderer taktweise zu stoppen.

Durch die EP 0 395 178 ist ein Übergabeeinrichtung für Stückgut zwischen zwei Förderbändern bekannt geworden, auf den das Stückgut aufliegend transportierbar ist. Die Übergabeeinrichtung weist einen schrägstehenden Schieber auf, dessen Winkellage und Vorschubgeschwindigkeit dem Geschwindigkeitsverhältnis der Förderbänder und deren Transportgeschwindigkeiten angepaßt ist.

Durch die schrägstehende Vorschubeinrichtung kann der Schieber die Stückgüter mitlaufend vom Zuführband entfernen bzw. auf das Übernahmeband übergeben, so daß die Stückgüter auf beiden Bändern im engen räumlichen und zeitlichen Abstand transportiert werden können.

Die genaue Übereinstimmung der Geschwindigkeitskomponenten der Vorschubeinrichtung mit den Transportgeschwindigkeiten der beiden Förderer wird das Stückgut relativ zu den anderen Stückgütern senkrecht zu den Förderrichtungen heraus- bzw. hineingeschoben. Dadurch können die Stückgüter in engem Längsabstand auf den Förderern angeordnet werden, so daß die Transportleistung entsprechend gesteigert werden kann, ohne die Transportgeschwindigkeit zu erhöhen. Außerdem wird die Längsreibung zwischen dem Stückgut und den Förderern entsprechend verringert. Die als Eierbehälter ausgebildeten Stückgüter können sicher vom Schieber erfaßt und vom Zuführband entnommen werden.

Der Erfindung liegt die Aufgabe zu Grunde, auch flache Stückgüter, wie briefartiges Postgut ohne Zeitverlust sicher übergeben zu können.

Diese Aufgabe wird durch die Erfindung gemäß Anspruch 1 gelöst.

Durch die Vorsprünge und die umlaufende Kette ist es möglich, auch dünnes Stückgut sicher zu erfassen. Durch die Synchronisation der Antriebe ist sichergestellt, daß die in die Zwischenräume zwischen den Kettenglieder eingreifenden Vorsprünge des Schiebers nicht mit den Querstäben kollidieren. Durch das Abheben des Schiebers beim Rückhub kann dieser über das ankommende Stückgut hinweggehoben werden.

Vorteilhafte Weiterbildungen der Erfindung sind in den Unteransprüchen gekennzeichnet:

Durch die Weiterbildung nach Anspruch 2 sind der Antrieb des Schiebers und des Zufuhrförderers zwangsweise miteinander synchronisiert. Das Umsetzgetriebe kann z. B. eine umlaufende Kette oder einen Zahnriemen aufweisen, von dem seitlich ein Mitnehmerzapfen für den Schieber absteht.

Die mitlaufenden Anschläge nach Anspruch 3 machen es möglich, das Stückgut in seiner Lage und Winkelstellung so genau auszurichten, daß eine definierte Weitergabe möglich ist.

Durch die Weiterbildungen nach den Ansprüchen 4 und 5 wird das Stückgut selbsttätig in einer Relativbewegung zur Kette beim Transport in die Übergabeposition an den vorderen Anschlag transportiert.

Im folgenden wird die Erfindung anhand eines in Zeichnung dargestellen Ausführungsbeispieles näher erläutert.
- Figur 1: zeigt schematisiert in einer Seitenansicht zwei Förderer für Stückgut mit einer Vorschubeinrichtung zum Übergeben,
- Figur 2: die Förderer und Vorschubeinrichtung nach Figur 1 in einer Draufsicht,
- Figur 3: einen Ausschnitt aus den Teilen nach Figur 1.

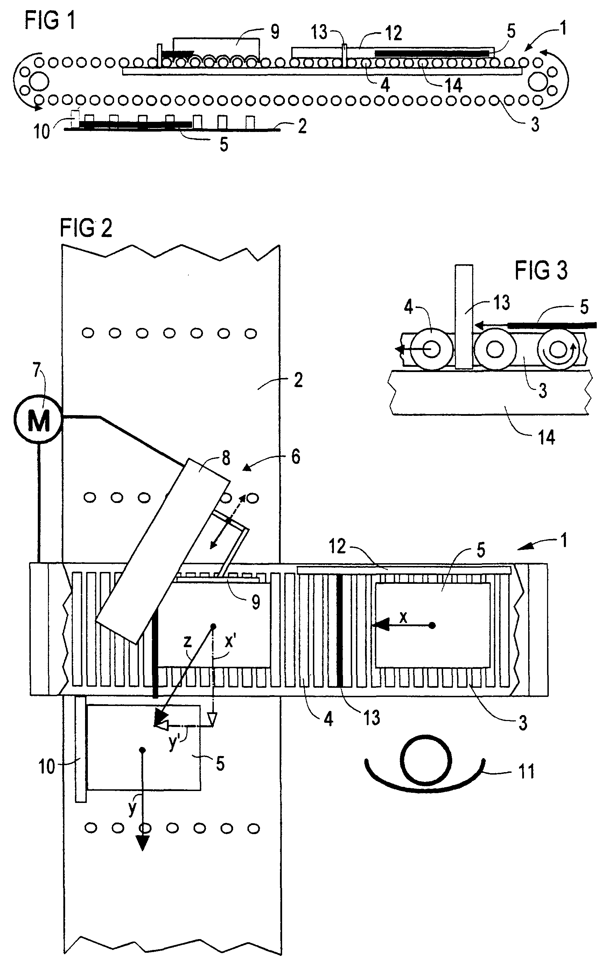

Nach den Figuren 1 und 2 sind zwei sich kreuzende lineare Förderer für ankommendes und abgehendes Stückgut als Zuführförderer 1 und Übernahmeförderer 2 ausgebildet. Der Zuführförderer 1 weist eine umlaufende Kette 3 mit Querstäben 4 auf, auf denen zu transportierendes flaches Stückgut 5 aufliegt.

Der Übernahmeförderer 2 weist eine zum Zuführförderer 1 senkrechte Transportrichtung auf und ist als umlaufendes Transportband ausgebildet, daß vom Zuführförderer 1 teilweise überlappt wird.

Im Kreuzungsbereich zwischen den beiden Förderern ist eine Vorschubeinrichtung 6 angeordnet, die das Übergeben des Stückguts 5 vom Zuführförderer 1 auf den bandartigen Übernahmeförderer 2 bewerkstelligt. Die Vorschubeinrichtung ist von einem Motor 7 angetrieben, der auch die Kette 3 antreibt. Ein Umsetzgetriebe 8 der Vorschubeinrichtung 6 verwandelt die rotatorische Bewegung des Motors 7 in eine periodische lineare Hin- und Herbewegung eines Schiebers 9, dessen Vorschubrichtung schräg zu den Förderrichtungen der Förderer verläuft, wobei sich der Winkel der Vorschubrichtung aus dem Verhältnis der Transportgeschwindigkeiten der beiden Förderer ergibt.

Die Vorschubgeschwindigkeit z des Schiebers 9 ist mittels des Umsetzgetriebes 8 so abgestimmt, daß ihre mit der Kettenrichtung übereinstimmende Komponente x' gleich der Transportgeschwindigkeit x der Kette 3 ist. Außerdem ist ihre mit dem Übernahmeförderer 2 übereinstimmende Komponente y' gleich der Transportgeschwindigkeit y des Übernahmeförderers 2.

Der Schieber 9 ist auf seiner der Kette zugewandten Seite mit nasenartigen Vorsprüngen 15 versehen, die beim Vorschieben in die Zwischenräume Zwischen den Querstäben hinein, so daß auch dünnes Stückgut sicher erfaßt wird. Der Schieber 9 erfaßt das im Kreuzungsbereich ankommende Stückgut 5 seitlich und schiebt es auf den Übernahmeförderer, ohne daß es dabei zu einer Transportunterbrechung kommt.

Die Vorschubrichtung und die Vorschubgeschwindkeit des Schiebers 9 ermöglichen es, daß das Stückgut 5 gegenüber der Kette 3 und dem Übernahmeförderer 2 keine Relativbewegung in der jeweiligen Transportrichtung ausführt und daß somit die Vorsprünge mit den Querstäben nicht kollidieren. Es ergibt sich lediglich relativ zu den Förderern eine Querbewegung, so daß das Stückgut 5 in engem Abstand zueinander transportiert werden kann.

Im Auflagebereich des Übernahmeförderers 2 ist eine seitliche Anschlagleiste 10 vorgesehen, die die Querbewegung des ankommenden Stückguts 5 begrenzt.

Der Zuführförderer 1 dient hier zusammen mit der Vorschubeinrichtung 6 als Eingabestation, bei der das Stückgut 5 von einer Bedienperson 11 von Hand auf die Kette 3 aufgelegt wird. Längsseitig der Kette 3 ist ein leistenförmiger Anschlagkörper 12 angebracht, der ein seitliches Herausrutschen des aufgelegten Stückguts 5 verhindert und eine Ausrichtung des anschlagenden Stückguts 5 in der Transportrichtung bewirkt.

Die Kette 3 ist mit mitlaufenden Anschlagleisten 13 versehen, die parallel zu den Querstäben verlaufen. Unterhalb des das Stückgut 5 tragenden Kettenabschnittes ist eine stationäre Stützbahn 14 für die Querstäbe 4 angeordnet.

Nach Figur 3 sind die Querstäbe 4 als drehbar gelagerte Walzen ausgebildet, die auf der dem Stückgut 5 abgewandten Unterseite der Kette 3 rollend an der Stützbahn 14 des Zuführförderers 1 aufliegen. Die Vorwärtsbewegung der Kette 3 ergibt somit eine Drehbewegung der Querstäbe 4, die das Stückgut 5 zusätzlich zur Transportbewegung der Kette 3 gegen den jeweiligen Anschlag 13, entsprechend der angegebenen Pfeilrichtung schieben, wodurch das Stückgut eine definierte Transportlage einnimmt und in seiner Winkellage am Anschlag 13 ausgerichtet wird.

## Patentansprüche

1. Vorrichtung zur Übergabe von Stückgut, insbesondere flachem Postgut zwischen zwei Förderern mit einander kreuzenden Förderrichtungen,
wobei das Stückgut (5) auf den als Linearförderer ausgebildeten Förderern (z. B. 1,2) aufliegend transportierbar ist,
wobei einer der Förderer als Zuführförderer (1) und der andere als Übernahmeförderer (2) ausgebildet ist,
wobei im Kreuzungsbereich der Förderer eine Vorschubeinrichtung (z. B. 6) vorgesehen ist, die das Stückgut (5) bei der Übergabe in der Richtung des Übernahmeförderers (2) bewegt,
wobei die Vorschubrichtung der Vorschubeinrichtung (6) schräg zu den Transportrichtungen der Förderer 8 (z. B. 1,2) derart verläuft, daß die Geschwindigkeitskomponenten (x', y')der Vorschubgeschwindigkeit z zumindest annähernd gleich den Transportgeschwindigkeiten (x, y) der Förderer (z.B. 1, 2) sind,
wobei die Vorschubeinrichtung (6) einen zu den Förderern schräg stehenden Schieber (9) aufweist,
**dadurch gekennzeichnet,**
**daß** der Zuführförderer (1) eine umlaufende Kette (3) mit Querstäben (4) aufweist,
das der Schieber (9) beim Vorschieben des Stückguts (5) mit Vorsprüngen (15) in die Zwischenräume zwischen den Querstäben eingreift,
**daß** der Schieber (9) beim Zurückziehen von den Querstäben abhebbar ist und
**daß** die Antriebe (z. B. 7) der Kette (3) und des Schiebers (9) synchronisiert sind.

2. Vorrichtung nach Anspruch 1,
**dadurch gekennzeichnet,**
**daß** die Kette (3) und der Schieber (9) von einem gemeinsamen Motor (7) angetrieben sind und
**daß** die Vorschubeinrichtung ein Umsetzgetriebe (8) aufweist, das zwischen dem Motor (7) und dem Schieber (9) angeordnet ist und das die rotatorische Bewegung des Motors (7) in eine periodische lineare Bewegung des Schiebers (9) umwandelt.

3. Vorrichtung Anspruch 1 oder 2,
**dadurch gekennzeichnet,**
**daß** der Zuführförderer (1) mitlaufende, zur Förderrichtung querstehende Anschläge (13) für das Stückgut (5) aufweist und mit Mitteln zum Vorschieben des aufliegenden Stückgutes (5) gegen den jeweils zugehörigen Anschlag (13) versehen ist.

4. Vorrichtung nach Anspruch 3,
**dadurch gekennzeichnet,**
**daß** das Stückgut (5) auf der dem Übernahmeförderer abgewandten Seite des Anschlags (13) auf den Zuführförderer (1) auflegbar ist und
**daß** das Stückgut (5) in der Richtung des Übernahmeförderers gegen den Anschlag (13) verschiebbar ist.

5. Vorrichtung nach Anspruch 4,
**dadurch gekennzeichnet,**
**daß** die Querstäbe (4) als leichtgängig drehbar gelagerte Walzen ausgebildet sind und
das die Walzen mit ihrer dem aufliegenden Stückgut (5) abgewandten Seite an einer sich in der Transportrichtung erstrekkenden Stützbahn (14) rollend anliegen.

## Claims

1. Device for transferring articles, in particular flat items of mail, between two conveyors having conveying directions that cross each other,
it being possible for the article (5) to be transported lying on the conveyors (e.g. 1, 2) constructed as linear conveyors,
one of the conveyors being constructed as a feed conveyor (1) and the other as an accepting conveyor (2),
in the crossing area of the conveyors, a feed device (e.g. 6) being provided, which moves the article (5) in the direction of the accepting conveyor (2) during the transfer,
the feed direction of the feed device (6) running at an angle to the transport directions of the conveyors 8 (e.g. 1, 2) in such a way that the speed components (x', y') of the feed speed z are at least approximately equal to the transport speeds (x, y) of the conveyors (e.g. 1, 2),
the feed device (6) having a pusher (9) at an angle to the conveyors,
**characterized**
**in that** the feed conveyor (1) has a circulating chain (3) with transverse rods (4),
**in that** the pusher (9) engages in the interspaces between the transverse rods with projections (15) as it pushes the article (5) forward,
**in that** the pusher (9) can be lifted off the transverse rods as it is withdrawn, and
**in that** the drives (e.g. 7) of the chain (3) and of the pusher (9) are synchronized.

2. Device according to Claim 1, **characterized**
**in that** the chain (3) and the pusher (9) are driven by a common motor (7) and
**in that** the feed device has a transmission gear mechanism (8) which is arranged between the motor (7) and the pusher (9) and which converts the rotational movement of the motor (7) into a periodic linear movement of the pusher (9).

3. Device according to Claim 1 or 2, **characterized**
**in that** the feed conveyor (1) has stops (13) for the article (5) which move together with the feed conveyor (1) and are transverse with respect to the conveying direction, and is provided with means for pushing the article (5) resting on the feed conveyor (1) forward against the respectively associated stop (13).

4. Device according to Claim 3, **characterized**
**in that** the article (5) can be placed on the feed conveyor (1) on the side of the stop (13) facing away from the accepting conveyor and
**in that** the article (5) can be displaced in the direction of the accepting conveyor, against the stop (13).

5. Device according to Claim 4, **characterized**
**in that** the transverse rods (4) are constructed as easy-running rotatably mounted rollers and
**in that** the rolls rest in a rolling manner, with their side facing away from the article (5) resting on them, on a supporting track (14) extending in the transport direction.

## Revendications

1. Dispositif destiné à transférer des colis, notamment des colis plats, entre deux convoyeurs ayant des directions de convoyage qui se croisent,
les colis (5) pouvant être transportés couchés sur les convoyeurs (par exemple 1, 2) conçus comme convoyeurs linéaires,
un des convoyeurs étant conçu comme convoyeur d'approche (1) et l'autre comme convoyeur de réception (2),
un dispositif de repoussement (par exemple, 6) étant prévu dans la zone de croisement des convoyeurs, qui déplace les colis (5), lors du transfert, dans la direction du convoyeur de réception (2),
le sens de repoussement du dispositif de repoussement (6) étant oblique par rapport aux directions de transport des convoyeurs (par exemple, 1, 2) de telle sorte que les composantes (x', y') de la vitesse de repoussement z sont au moins approximativement égales aux vitesses de transport (x, y) des convoyeurs (par exemple, 1, 2),
le dispositif de repoussement (6) comportant une glissière (9) qui est oblique par rapport aux convoyeurs,
**caractérisé par le fait**
**que** le convoyeur d'approche (1) comporte une chaîne rotative (3) avec des barres transversales (4),
**que** la glissière (9), lors du repoussement des colis (5), s'engage par des saillies (15) dans les intervalles entre les barres transversales,
**que** la glissière (9) peut être relevée lorsqu'elle se retire des barres transversales et
**que** les entraînements (par exemple, 7) de la chaîne (3) et de la glissière (9) sont synchronisés.

2. Dispositif selon la revendication 1
**caractérisé par le fait**
**que** la chaîne (3) et la glissière (9) sont entraînées par un moteur commun (7) et que le dispositif de repoussement comporte un mécanisme de conversion (8) qui est disposé entre le moteur (7) et la glissière (9) et qui transforme le mouvement rotatif du moteur (7) en un mouvement linéaire périodique de la glissière (9).

3. Dispositif selon la revendication 1 ou 2
**caractérisé par le fait**
**que** le convoyeur d'approche (1) comporte des butées (13) pour les colis (5), qui sont perpendiculaires à la direction de convoyage et qui tournent avec le convoyeur, et est équipé de moyens destinés à faire avancer chaque colis (5), qui repose sur le convoyeur, jusqu'à la butée correspondante (13).

4. Dispositif selon la revendication 3
**caractérisé par le fait**
**que** les colis (5) peuvent être déposés sur le convoyeur d'approche (1) sur le côté de la butée (13) opposé au convoyeur de réception et
**que** les colis (5) peuvent être repoussés contre la butée (13) dans la direction du convoyeur de réception.

5. Dispositif selon la revendication 4
**caractérisé par le fait**
**que** les barres transversales (4) sont conçues sous la forme de rouleaux qui peuvent toumer facilement et
**que** les rouleaux reposent en tournant, avec leur face opposée aux colis (5) qui reposent sur eux, sur une table de soutien (14) qui s'étend dans le sens du transport.
